# EUROPÄISCHE PATENTSCHRIFT

(11) **EP 3 917 749 B1**
(45) Veröffentlichungstag und Bekanntmachung des Hinweises auf die Patenterteilung: **11.10.2023**
(21) Anmeldenummer: 20701613.0
(22) Anmeldetag: 27.01.2020
(51) Int. Cl.: B29C 48/40, B29B 7/48, B29C 48/625, C08L 3/02, B29C 48/80, B29C 48/92, B29C 48/76

(54) **VERFAHREN ZUR HERSTELLUNG VON STÄRKEBLENDS**
METHOD FOR THE PREPARATION OF STARCH BLENDS
PROCÉDÉ DE PRODUCTION DE MÉLANGES D'AMIDON

(30) Priorität: 30.01.2019 EP 19154571
(43) Veröffentlichungstag der Anmeldung: 08.12.2021
(73) Patentinhaber: BASF SE, 67056 Ludwigshafen am Rhein (DE)
(72) Erfinder: LOOS, Robert, 67056 Ludwigshafen (DE); EFFEN, Norbert, 67056 Ludwigshafen (DE); SCHLUTT, Nora, 67056 Ludwigshafen (DE); SINKEL, Carsten, 67056 Ludwigshafen (DE); AUFFERMANN, Joerg, 67056 Ludwigshafen (DE)
(74) Vertreter: BASF IP Association
(86) Internationale Anmeldenummer: PCT/EP2020/051857
(87) Internationale Veröffentlichungsnummer: WO 2020/156970

(56) Entgegenhaltungen:
- WO-A1-00/39212
- WO-A1-2008/144845
- WO-A1-2010/134208
- WO-A1-2019/138022
- US-A- 5 852 114
- US-A- 5 895 545
- US-A1- 2009 160 095
- US-A1- 2012 283 364

## Beschreibung

Die vorliegende Erfindung betrifft ein einstufiges Verfahren zur Herstellung von Stärkeblends auf Doppelschneckenextruder gemäß den Ansprüchen 1 und 2.

Stärkeblends, insbesondere biologisch abbaubare Stärkeblends, sind aus dem Stand der Technik bereits seit mehreren Jahrzehnten bekannt und verschiedene Verfahren zu ihrer Herstellung sind in der Literatur beschrieben. Generell lassen sich ein- und zweistufige Verfahren unterscheiden.

Ein einstufiges Verfahren, welches einen hohen Durchsatz (in kg/h) ermöglichen und eine vergleichbar hohe oder höhere Produktqualität als ein zweistufiges Verfahren liefern würde, wäre hinsichtlich der Verfahrenskosten und des Energieverbrauchs deutlich zu bevorzugen. Bei zweistufigen Verfahren wird die Stärke in einem separaten Schritt zur thermoplastifizierten Stärke (TPS) aufgeschlossen.

Bei den einstufigen Verfahren erfolgt die Plastifizierung der Stärke und das Mischen mit einem weiteren Polymer in einem Verfahrensdurchgang auf derselben oder zwei hintereinandergeschalteten Maschinen, wobei meist auf Doppelschneckenextrudern gearbeitet wird. Zum Plastifizieren der Stärke werden Weichmacher wie Glycerin, Oligoglycerin, Penthaerythrol und Sorbitol vorzugsweise in Mischungen mit Wasser eingesetzt.

Die Dosierung der Einsatzstoffe kann auf verschiedene Weise erfolgen: Bei der direkten Dosierung werden alle Einsatzstoffe wie Stärke, Polymer oder optional weitere Additive und feste Weichmacher in der 1. Zone vorgelegt bzw. in der nachfolgenden Zone dann die flüssigen Weichmacher wie z.B. Polyole und /oder Wasser zudosiert (z.B. US 2011/0177275A1). Aus der EP 906367A1 und EP 2467418A1 ist bekannt, die Stärke mit Weichmachern zunächst bei Temperaturen über 140°C zu plastifizieren. Die so erhaltene thermoplastifizierte Stärke (TPS) wird entgast und so das Wasser weitgehend entfernt. Erst dann wird das weitere Polymer in aufgeschmolzener oder granulärer, fester Form zudosiert.

Allen im Stand der Technik beschriebenen Verfahren gemeinsam ist, dass die Gelatinisierung / Plastifizierung der Stärke bereits kurz nach der Dosierung des Weichmachers bei Temperaturen oberhalb der Gelatinisierungstemperatur erfolgt.

Nachteilig an den zuvor beschriebenen einstufigen Verfahren ist zum einen der geringe Durchsatz. So werden in der EP 906367A1 auf einem 45mm Extruder nur 50 bis 60 kg/h und in der EP 2467418A1 auf einem 26 mm Extruder lediglich 10 kg/h erreicht. Trotz des geringen Durchsatzes ist die TPS in der Regel nur grobteilig in der Polymermatrix dispergiert. In der EP 2467418A1 konnte dieser Nachteil durch Zusatz von speziellen und teuren Verträglichkeistvermittlern auf Basis von Maleinsäureanhydrid teilweise kompensiert werden. Schließlich weisen Polymerstränge der zuvor genannten Stärkeblends daraus hergestellte Folien eine hohe Rauigkeit und Stippen auf, was auf agglomerierte, schlecht dispergierte Stärkepartikel zurückzuführen ist. Bedingt durch den geringen Extruderfüllgrad im Stand der Technik kommt es ferner zu einem unverhältnismäßig hohen Energieeintrag aufgrund der resultierenden hohen Scherbelastung in die wenige Schmelze und damit aufgrund der daraus resultierenden höheren Temperaturen, zu unerwünschten, hell- bis dunkelbraunen Verfärbungen der aus diesen Stärkeblends hergestellten Produkte Die Druckschriften WO 2010/134208 A1, WO 00/39212 A1, WO 2008/144845 A1 und WO 2019/138022 A1 beschreiben weitere Verfahren zur Herstellung von Stärkeblends.

Ziel der vorliegenden Erfindung war es daher, ein einstufiges Verfahren mit hohem Durchsatz zur Herstellung von Blends mit feinteiliger Dispergierung der TPS in der Polymermatrix und mit hohem Weißgrad bereitzustellen.

Überraschenderweise löst das eingangs beschriebene Verfahren, bei dem die Stärke mit dem Weichmacher auf einer relativ langen Benetzungsstrecke des Extruders bei Innentemperaturen unterhalb der Gelatinisierungstemperatur der Stärke benetzt wird, wobei es noch nicht zu einem Aufschluss der Stärke kommt, die gestellte Aufgabe.

Im Folgenden wird das erfindungsgemäße Verfahren näher beschrieben.

Die Gelatinisierung, dh. der Aufschluss der Stärkekörner, erfolgt bei einer Temperatur, die abhängig ist in erster Linie von der Art der verwendeten Stärke, insbesondere deren Wassergehalt sowie von der Menge und Struktur des Weichmachers und dessen Wassergehalt (siehe z.B. Tan et al., Carbohydrate Polymers 2004, 58, 191-204; Taghizadeh & Favis, Carbohydrate Polymers 2013, 92, 1799-1808). In der Regel startet die Gelatinisierung der Stärke in den für Stärkeblends relevanten Konzentrationsbereichen an Weichmachern oberhalb von 70 bis 100°C. Im Schritt i) des erfindungsgemäßen Verfahren wird daher vorzugsweise eine sich ergebende Extrudertemperatur unter 100°C, bevorzugt unterhalb von 85°C und insbesondere bevorzugt unterhalb von 60°C eingestellt.

Damit die Stärke bei hohen Durchsätzen ausreicheichend und gleichmäßig mit dem Weichmacher benetzt wird, ist eine bestimmte Benetzungsstrecke im Extruder (Schritt i) vonnöten. Die Benetzungsstrecke wird gemessen von der Stelle, an der die Stärke und der Weichmacher oder eine Teilmenge des Weichmachers erstmals aufeinandertreffen bis zu der Stelle, bei der die Temperatur des Extruders über die Temperatur erhöht wird, bei der die Stärke beginnt zu gelatinisieren (Gelatinisierungstemperatur). Die Benetzungsstrecke weist in der Regel eine Extruderlänge von 8D, (d.h. 8 x den Durchmesser des Schneckenzylinders), und vorzugsweise mindestens12D auf. Wird mit zwei hintereinander geschalteten Extrudern gearbeitet so wird in der Regel der erste Extruder zur Benetzung der Stärke genutzt und weist üblicherweise eine Länge von 8D bis 80D und vorzugsweise Eine Länge von 12D bis 60D auf. Die zusätzliche Verweilzeit der Stärke zusammen mit dem Weichmacher führt zu Produkten, die nur einen sehr geringen Gehalt an agglomerierten, nicht vollständig aufgeschlossenen Stärkepartikeln enthalten. Benetzungsstrecken von größer 30D bei einem Extruder und 60D bei Verwendung von zwei Extrudern sind aus wirtschaftlichen Gründen weniger interessant.

In einer Ausführungsform A des erfindungsgemäßen Verfahrens sind in der Benetzungsstrecke des Extuders lediglich fördernde Schneckenelemente eingebaut. Bei dieser Fahrweise kann das mit Stärke nicht mischbare Polymer an jeder beliebigen Stelle der Benetzungsstrecke zugegeben werden, auch in Zone 1 zu Beginn des Extruders. Vorzugsweise wird das Polymer in fester Form zugegeben. Die Ausführungsform A des Verfahrens mit Zugabe des Polymers in fester Form gleich in Zone 1 des Extruders wird in dem erfindungsgemäßen Beispielen 8 verdeutlicht.

In einer bevorzugten Ausführungsform B sind in der Benetzungsstrecke des Extruders neben fördernden Schneckenelementen mindestens ein, bevorzugt zwei oder mehr stark mischende Schneckenelemente eingebaut, welche die gleichmäßige Benetzung der Stärke mit dem Weichmacher zusätzlich fördern und die Anzahl an agglomerierten Stärkepartikeln im Endprodukt nochmals reduzieren (Schritt i). Unter stark mischenden Schneckenelementen werden beispielsweise Knetblöcke, Zahnmischelemente oder sonstige Scherelemente verstanden. Bei Ausführungsform B hat es sich als vorteilhaft erwiesen, das mit Stärke nicht mischbare Polymer erst nach diesen stark mischenden Schneckenelementen, jedoch vor dem Ende der Benetzungsstrecke des Extruders, vorzugsweise in fester Form zuzudosieren. Diese bevorzugte Fahrweise der Ausführungsform B wird in den erfindungsgemäßen Beispielen 1 bis 7 verdeutlicht.

Die effizientere Benetzung der Stärke mit dem Weichmacher in Ausführungsform B hat sich insbesondere bei Fahrweisen mit hohen Durchsätzen von größer 100 kg/h, insbesondere größer 120 kg/h und insbesondere bevorzugt größer 150 kg/h bewährt, jeweils bezogen auf einen Doppelschneckenextruder mit einem Schneckenduchmesser von 40mm und bezogen auf das wasserfreie Endprodukt (Stärkeblend). Bei einem Doppelschneckenextruder mit 65mm Schneckendurchmesser werden Durchsätze von größer 400 kg/h, insbesondere größer 500 kg/h und insbesondere bevorzugt größer 600kg/h erreicht - bezogen auf das wasserfreie Endprodukt.

Auch ist insbesondere Ausführungsform B zur Herstellung von Stärkeblends mit einer sehr feinen Dispergierung der TPS in der Polymermatrix oder sogar co-kontinuierliche Strukturen mit einer sehr feinen Lamellenstruktur geeignet. Überraschend gelang die gute Dispergierung selbst bei Stärkeblends, welches hohe TPS-Gehalte größer 29%, sogar größer 39% und insbesondere sogar größer als 44% aufweisen.

Bei beiden Ausführungsformen hat sich vorteilhaft gezeigt, das mit Stärke nicht mischbare Polymer in fester Form (z.B. als Granulat) noch vor dem Thermoplastifizieren der Stärke einzutragen, dh. bei Temperaturen unterhalb des Gelatinisierungspunktes der Stärke/Weichmachermischung, sodass das Aufschmelzen des Polymers und das Thermoplastifizieren der Stärke in der nachfolgenden Aufschmelzzone simultan geschieht.

Prinzipiell kann das mit Stärke nicht mischbare Polymer an jeder beliebigen Stelle des Extruders zugegeben werden (Schritt ii). Es muss jedoch nach Zugabe des Polymers eine ausreichende Schneckenlänge vorliegen, damit das Polymer gegebenenfalls aufschmelzen kann (wenn die Zugabe des Polymers als Feststoff erfolgt), eine Mischung mit der Stärke (thermoplastifiziert oder noch nicht thermoplastifiziert) und die Dispergierung der thermoplastifizierten Stärke in die Polymermatrix gewährleistet werden kann.

In Schritt ii wird während der Plastifizierstrecke die Innentemperatur des Extruders schrittweise bis auf Temperaturen über 130°C erhöht, um gegebenenfalls das mit Stärke nicht mischbare Polymer aufzuschmelzen und die Stärke aufzuschließen, zu destrukturieren, zu thermoplastifizieren und im geschmolzenen Polymer zu dispergieren. Vorzugsweise werden in der Plastifizierstrecke Gehäusetemperaturen, gegebenenfalls ansteigend bis zur Austrittsdüse des Extruders, von anfänglich 90 bis letztlich 260°C, vorzugsweise letztlich 230°C und besonders bevorzugt von letztlich 220°C eingestellt und die Massetemperatur der Polymerschmelze am Düsenaustritt unterhalb von 250°C, bevorzugt unterhalb von 240°C und besonders bevorzugt unterhalb von 230°C gehalten.

Die vergleichsweise kalte Fahrweise in Schritt i hat den Vorteil, dass das Mischen und Homogenisieren der Schmelze im weiteren Verlauf der Extrusion in Gegenwart einer erheblichen Menge an Wasser, in der Regel zwischen 1 bis 20 Gew.-%, bevorzugt 3 bis 15 Gew.-%, besonders bevorzugt 5 bis 10 Gew.-%, bezogen auf die Summe der wasserfreien Endprodukte, geschieht. Die Stärke wird somit vor einem nachteiligen thermischem Abbau unter Verfärbung weitestgehend bewahrt. Weiterhin erleichtert der zumindest zu Beginn der Plastifizierstrecke vorhandene, hohe Wassergehalt eine homogene und feinteilige Dispergierung der Stärke in der Polymermatrix.Im Schritt ii wird weiterhin der Wassergehalt in der Mischung oder vorzugsweise Schmelze, der aus dem Wassereintrag der Stärke, des verwendeten Weichmachers oder der verwendeten Weichmachermischung oder durch separaten Eintrag resultiert, mittels beispielsweise einer Seitenstrangentgasung reduziert, sodass er beim Verlassen des Extruders (an der Austrittsdüse) kleiner 5%, bezogen auf den Stärkeblend beträgt. Bei der Granulierung des Stärkeblends über eine Unterwassergranulierung wird vorteilhaft ein Wassergehalt an der Austrittsdüse kleiner 3%, bezogen auf den Stärkeblend eingestellt. Bei der Verwendung einer Stranggranulierung wird in der Regel ein Wassergehalt kleiner 2% und vorzugsweise kleiner 1%, bezogen auf den Stärkeblend eingestellt.

Im Folgenden werden die stofflichen Komponenten des erfindungsgemäßen Verfahrens näher beschrieben:
Als Stärke wird in der Regel native Stärke eingesetzt. Native Stärke liegt in Form von hochkristallinen Körnern (Granula) vor, deren Schmelzpunkt oberhalb ihrer Zersetzungstemperatur liegt. Native Stärke weist im Allgemeinen einen nicht unbeträchtlichen Anteil an größeren Granulatkörnchen mit mehr als 10 Mikrometern Durchmesser auf, sodass sie in nicht aufgeschlossener und nicht thermoplastifizierter Form sich nicht zur Herstellung qualitativ hochwertiger dünner Folien eignet. Unter nativer Stärke werden im allgemeinen Mais-, Kartoffel-, Weizen-, Erbsen- oder Reisstärke oder Mischungen davon verstanden. Insbesondere wird unter nativer Stärke Weizen- und insbesondere bevorzugt Mais- oder Kartoffelstärke verstanden.

In der Literatur sind zahlreiche niedermolekulare und höhermolekulare Verbindungen als Weichmacher der Stärke beschrieben. Für das vorliegende Verfahren haben sich insbesondere Wasser und Polyole sowie deren Mischungen als geeignet erwiesen. Unter den Polyolen sind Glycerin, Sorbitol, Sorbitolester, oligomerisiertes Glycerin und Pentaerythrit bevorzugt und Glycerin, Sorbitol, und oligomerisiertes Glycerin (Oligoglycerin) besonders bevorzugt. Bevorzugte Zusammensetzungen des verwendetenOligoglycerins sind in der WO 2012/017095 und WO 2017/153431beschrieben, insbesondere weist das Oligoglycerin vorzugsweise einen Mono-Glyceringehalt von kleiner 10 Gew.-% auf, um ein Ausdampfen des Mono-Glycerins bei der anschließenden Folienextrusion weitestgehend zu vermeiden

Als Weichmacher insbesondere bevorzugt ist Sorbitol, und hierbei insbesondere eine wäßrige Sorbitollösung mit einem Wasseranteil von 5 bis 80%, bevorzugt 5 bis 50% und besonders bevorzugt von 10 bis 35%.

Als besonders bevorzugter Weichmacher hat sich eine wäßrige Sorbitollösung, die durch unvollständig depolymerisierte Stärkelösung hergestellt worden ist und die noch signifikante Anteile von mindestens 5%, vorzugsweise mehr als 10% und besonders bevorzugt mehr als 15%, bezogen auf die wasserfreie Mischung, an höhermolekularen Verbindungen als Sorbitol enthalten.

Der Weichmacher (ohne dessen Wasseranteil) wird in der Regel im Verhältnis zur nativen Stärke (ohne deren Wasseranteil) im Verhältnis von 5 bis 40 Gew.-%, vorzugsweise 10 bis 30 Gew.-% und insbesondere bevorzugt 15 bis 25 Gew.-% eingesetzt.

Der Wasseranteil in der Extrudermischung, der aus dem Wassereintrag der Stärke, des verwendeten Weichmachers oder der verwendeten Weichmachermischung oder durch separaten Eintrag von Wasser in den Extruder resultiert, beträgt in der Regel vor der Entgasung zwischen 1 bis 20 Gew.-%, bevorzugt 3 bis 15 Gew.-%, besonders bevorzugt 5 bis 10 Gew.-%, bezogen auf die Summe der wasserfreien Endprodukte. Um den Wassergehalt im Extruder optimal einzustellen und nicht zu hoch werden zu lassen, haben sich Mischungen einer wäßrigen Sorbitollösung mit Oligoglycerin im Gewichtsverhältnis von Sorbitol : Oligoglycerin = 15 : 85 bis 75 : 25 als vorteilhaft erwiesen, jeweils bezogen auf das Mengenverhältnis der wasserfreien Sorbitollösung inklusive ggf. vorhandener höhere Oligomere im Verhältnis zur wasserfreien Oligoglycerinmischung

Unter mit Stärke nicht mischbaren Polymeren werden beispielsweise Polyethylen oder Polypropylen und hier insbesondere solche, die aus erneuerbaren Rohstoffen hergestellt worden sind, Polystyrol und insbesondere bevorzugt Polyester, die gemäß DIN EN 13432 biologisch abbaubar sind.

Unter letzteren sind insbesondere Polyester vom Diol-Dicarbonsäuretyp bevorzugt, wobei auch hier wieder zwischen aliphatischen Polyestern aufgebaut aus aliphatischen Diolen und aliphatischen Disäuren und aliphatisch-aromatischen Polyestern, aufgebaut aus aliphatischen Diolen, aliphatischen und aromatischen Disäuren unterschieden. Gemeinsam ist diesen Polyestern, dass sie biologisch abbaubar nach DIN EN 13432 sind.

Unter den insbesondere bevorzugten biologisch abbaubaren, aliphatisch-aromatischen Polyestern sind lineare, nicht kettenverlängerte Polyester wie sie beispielsweise in der WO 92/09654 beschrieben sind und vorzugsweise kettenverlängerte und/oder verzweigte Polyester wie sie beispielsweise in der WO 96/15173, WO-A 2006/097353 oder der WO 98/12242 beschrieben sind, zu verstehen. Insbesondere sind unter aliphatisch-aromatischen Polyestern Produkte wie ecoflex^{®} (BASF SE) und Origo⁻Bi^{®} (Novamont) zu verstehen.

Zu den besonders bevorzugten aliphatisch-aromatischen Polyestern zählen Polyester, die als wesentliche Komponenten:
A) eine Säurekomponente aus:
   a1) 30 bis 99 mol-%, vorzugsweise 30 bis 70 mol-% einer aliphatischen C₄-C₁₈-Dicarbonsäure wie vorzugsweise Bernsteinsäure, Adipinsäure, Sebazinsäure, Azelainsäure oder Brassylsäure oder deren esterbildende Derivate oder Mischungen davon, oder Mischungen von Sebazinsäure mit Adipinsäure oder Bernsteinsäure;
   a2) 1 bis 70 mol-%, vorzugsweise 30 bis 70 mol-% einer Terephthalsäure oder Furandicarbonsäure oder deren esterbildendem Derivat oder Mischungen davon und
B) 98,5 bis 100 mol%, bezogen auf die Säurekomponente A, einer C₂-C₆-Diolkomponente wie vorzugsweise 1,3-Propandiol und 1,4-Butanediol und insbesondere bevorzugt 1,4-Butanediol das aus erneuerbaren Rohstoffen hergestellt ist;
   und
C) 0 bis 1,5 mol%, vorzugsweise 0,01 bis 1 mol%, bezogen auf die Säurekomponente A, einer Komponente ausgewählt aus
   c1) einer Verbindung mit mindestens drei zur Esterbildung befähigten Gruppen,
   c2) eines Di- oder Polyisocyanates,
   c3) eines Di- oder Polyepoxids
   oder Mischungen aus c1) bis c3) enthalten.

Insbesondere bevorzugt sind die folgenden aliphatisch-aromatischen Polyester: Polybutylensebacat-co-terephthalat (PBSeT), Polybutylenazetat-co-terephthalat (PBAzT) Polybutylenadipat-co-terephthalat (PBAT), Polypropylenadipat-co-terephthalat (PPrAT), Polybutylensuccinat-co-terephthalat (PBST) oder Polybutylensebacat-co-adipat-co-terephthalat (PBSeAT) oder Polybutylensebacat-co-succinat-co-terephthalat (PBSeST) oder Mischungen aus zwei oder mehreren der vorgenannten Polyester. Die zuvor genannten aliphatisch-aromatischen Polyester enthalten als Diolkomponente vorzugsweise 1,4 Butandiol aus erneuerbaren Quellen.

Die bevorzugten aliphatisch-aromatischen Polyester sind charakterisiert durch ein Molekulargewicht (Mₙ) im Bereich von 1000 bis 100000, insbesondere im Bereich von 9000 bis 75000 g/mol, bevorzugt im Bereich von 10000 bis 50000 g/mol und einem Schmelzpunkt im Bereich von 60 bis 170, bevorzugt im Bereich von 80 bis 150°C.

Unter aliphatischen Polyestern werden auch Polyester aus aliphatischen Diolen und aliphatischen Dicarbonsäuren wie Polybutylensuccinat (PBS), Polybutylenadipat (PBA), Polybutylensuccinatadipat (PBSA), Polybutylensuccinatsebacat (PBSSe), Polybutylensebacat (PBSe) oder entsprechende Polyester mit einer Polyesteramid- oder Polyesterurethan-Teilstruktur verstanden. Die aliphatischen Polyester werden beispielsweise von den Firmen Mitsubishi unter dem Namen BIOPBS vermarktet. Neuere Entwicklungen sind in der WO-A 2010/034711 beschrieben.

Weiterhin können auch Mischungen von aliphatischen und aliphatisch-aromatischen Polyestern eingesetzt werden oder den zuvor genannten aliphatischen oder aliphatisch-aromatischen Polyestern, wobei als letztere vorzugsweise Polybutylenadipat-coterephthalat (PBAT), Polybutylensebacat-coterephthalat (PBSeT) sowie Mischungen aus PBAT und PBSeT eingesetzt werden, und bis 44,99 Gew,-%, vorzugsweise 1 bis 29,9 Gew.-% und insbesondere bevorzugt 1 bis 10 Gew.-%, weitere biologisch abbaubare Polymere ausgewählt aus der Gruppe bestehend aus: Polymilchsäure (PLA), Polycaprolacton (PCL), Polypropylencarbonat, Polyhydroxyalkanoat zugesetzt werden.

Den Polymermischungen - insbesondere denjenigen die Polymilchsäure enthalten - können Verträglichkeitsvermittler wie a) ein Epoxidgruppen-haltigen Copolymers auf Basis Styrol, Acrylsäureester und/oder Methacrylsäureester und/oder, b) ein Epoxidgruppen-haltiges natürliches Öl, Fettsäureester oder Fettsäureamid.

Unter Epoxidgruppen-haltigem Copolymer auf Basis Styrol, Acrylsäureester und/oder Methacrylsäureester werden die folgenden Strukturen a) verstanden. Die Epoxidgruppen tragenden Einheiten sind vorzugsweise Glycidyl(meth)acrylate. Als vorteilhaft haben sich Copolymere mit einem Glycidylmethacrylat-Anteil von größer 20, besonders bevorzugt von größer 30 und insbesondere bevorzugt von größer 50 Gew.-% des Copolymers erwiesen. Das Epoxid-Äquivalentgewicht (EEW) in diesen Polymeren beträgt vorzugsweise 150 bis 3000 und insbesondere bevorzugt 200 bis 500 g/Äquivalent. Das mittlere Molekulargewicht (Gewichtsmittel) M_{W} der Polymere beträgt vorzugsweise 2000 bis 25.000, insbesondere 3000 bis 8.000. Das mittlere Molekulargewicht (Zahlenmittel) Mₙ der Polymere beträgt vorzugsweise 400 bis 6.000, insbesondere 1000 bis 4.000. Die Polydispersität (Q) liegt im Allgemeinen zwischen 1.5 und 5. Epoxidgruppen-haltige Copolymere des obengenannten Typs werden beispielsweise von der BASF Resins B.V. unter der Marke Joncryl^{®} ADR vertrieben. Als Verträglichkeitsvermittler besonders geeignet ist Joncryl^{®} ADR 4368 oder Joncryl ADR 4468C oder Joncryl ADR 4468HP.

Der Verträglichkeitsvermittler a) wird in 0 bis 2 Gew.-%, vorzugsweise 0,05 bis 0,6 Gew.-%, bezogen auf das Gesamtgewicht der Stärkemischung zugegeben.

Weiterhin kommen als Verträglichkeitsvermittler b) Epoxidgruppen-haltige (epoxidierte) natürliche Öle, Fettsäureester oder Fettsäureamide eingesetzt werden. Unter natürlichen Ölen werden beispielsweise Olivenöl, Leinöl, Sojabohnenöl, Palmöl, Erdnussöl, Kokusnussöl, Tangöl, Lebertran oder eine Mischung von diesen Verbindungen verstanden. Insbesondere bevorzugt sind epoxidiertes Sojabohnenöl (z.B. Merginat^{®} ESBO von Hobum, Hamburg, oder Edenol^{®} B 316 von Cognis, Düsseldorf). Die Verträglichkeitsvermittler der Strukturtypen a) und b) können auch kombiniert eingesetzt werden, beispielsweise Joncryl^{®} ADR 4368 (Strukturtyp a)) und Merginat^{®} ESBO (Strukturtyp b).

Der Verträglichkeitsvermittler b) wird übicherweise in 0 bis 6 Gew.-%, vorzugsweise 0,3 bis 3 Gew.-%, bezogen auf das Gesamtgewicht der Stärkemischung zugegeben.

Der Reaktionsmischung können weiterhin organische Säuren wie Apfelsäure, Milchsäure, Weinsäure oder Zitronensäure zugesetzt werden, insbesondere wenn Verträglichkeitsvermittler b) verwendet werden. Die Säuren werden in der Regel in einer Konzentration von 0,01 bis 0,45 und vorzugsweise 0,05 bis 0,3 Gew.-%, bezogen auf das Gesamtgewicht der Stärkemischung, eingesetzt.

Den Stärkeblends können auch mineralische Füllstoffe wie beispielsweise Kreide, Graphit, Gips, Leitruß, Eisenoxid, Calciumphoshat, Dolomit, Kaolin, Siliziumdioxid (Quarz), Natriumcarbonat, Titandioxid, Silikat, Wollastonit, Glimmer, Montmorillonite zugesetzt werden, Die mineralischen Füllstoffe kommen in der Regel in einer Menge von 0,1 bis 20 Gew.-% und vorzugsweise 2 bis 15 Gew.-%, bezogen auf das Gesamtgewicht der Stärkemischung, zum Einsatz.

Üblicherweise können die erfindungsgemäße Stärkeblends weitere dem Fachmann bekannte, Additive enthalten. Beispielsweise die in der Kunststofftechnik üblichen Zusatzstoffe wie Stabilisatoren; Nukleierungsmittel wie die bereits obengenannten mineralischen Füllstoffe oder auch kristalline Polymilchsäure; Gleit- und Trennmittel wie Stearate (insbesondere Calziumstearat); Tenside wie Polysorbate, Palmitate oder Laurate; Antistatikum, UV-Absorbers; UV-Stabilisators; Antifog-Mittel oder Farbstoffe wie beispielsweise Graphit. Die Additive werden in der Regel in Konzentrationen von 0 bis 2 Gew.-%, insbesondere 0,1 bis 2 Gew.-% bezogen auf das Gesamtgewicht der Stärkemischung, eingesetzt.

Statt Mischungen der zuvor genannten biologisch abbaubaren Polyester oder Polycarbonate einzusetzen, können diese Polyester oder Polycarbonate auch an verschiedenen Stellen in den Extruder zudosiert werden. So bietet sich an, hydrolyseempfindliche Polyester wie beispielsweise Polybutylensuccinat, Polyhydroxyalkanoate oder Polymilchsäure an einer Stelle des Extruders einzudosieren, an der der Wassergehalt der Polymerschmelze nach zuvoriger Entgasung bereits niedriger ist.

Weiterhin können die zuvor genannten Polmere, weitere dem Fachmann bekannte, Additive enthalten. Beispielsweise die in der Kunststofftechnik üblichen Zusatzstoffe wie Stabilisatoren; Antiblockmittel, Gleitmittel, Nukleiierungsmittel, Antistatikum, UV-Absorber; Weichmacher wie Citrofol, oder Antifogmittel wie Atmer, Verträglichkeitsvermittler wie ein Epoxidgruppen-haltiges Copolymer auf Basis Styrol, Acrylsäureester und/oder Methacrylsäureester oder Farbstoffe. Natürlich können die für Stärkeblends üblichen Additive wie die in der EP0947559 und von Zhang et al., Polm. Adv. Technol. 2018, S. 1-11 beschriebenen Fettsäureester und organische Säuren zum Einsatz gelangen. Diese Additive werden in der Regel in Konzentrationen von 0 bis 2 Gew.-%, insbesondere 0,1 bis 1 Gew.-% bezogen auf die erfindungsgemäße Polyestermischung eingesetzt.

Die zuvor genannten Additive oder Hilfsstoffe können auch separat vom mit der Stärke nicht löslichen Polymer in den Extruder eingespeist werden.

Das erfindungsgemäße einstufige Verfahren hat zahlreiche Vorteile. Das schonende und effiziente Benetzten der Stärke mit einem oder mehreren Weichmachern auf der Benetzungsstrecke des Extruders führt im weiteren Verlauf der Plastifizierstrecke zu einer schonenden Gelatinisierung/Thermoplastifizierung der Stärke und schonenden Einbau der TPS in die Matrix des mit Stärke nicht mischbaren Polymers. Im Vergleich zu den im Stand der Technik beschriebenen Verfahren erfolgen die angesprochen Prozesse auf der Plastifizierstrecke in Gegenwart erheblicher Menge an Wasser, in der Regel zwischen 1 bis 20%, bevorzugt 3 bis 15%, besonders bevorzugt 5 bis 10%, bezogen auf die Summe der wasserfreien Endprodukte, wodurch die Stärke vor einem nachteiligen thermischem Abbau unter Verfärbung weitestgehend bewahrt wird. Gleichzeitig wird eine feinteilge Dispergierung der Stärke in der Polymermatrix ermöglicht und dies bei hohen Durchsätzen und hohen Stärkegehalten im Polymer. Ferner kann auf den Zusatz von speziellen und teuren Verträglichkeitsvermittlern, die im Stand der Technik meist zugesetzt werden, um die Dispergierung der TPS im Polymer zu erreichen, verzichtet werden.

So lassen sich mit dem erfindungsgemäßen Verfahren der Ansprüche 1 bis 12, und vorzugsweise 10 bis 12, erstmals großtechnisch Stärkeblends enthaltend mit einem Stärkeanteil von 39 bis 47 Gew.-%, bezogen auf die Summe an wasserfreier Stärke und wasserfreiem Weichmacher, und gleichzeitig einem Helligkeitswert L^{∗} nach EN ISO 11664-4 von L^{∗} größer als 75 und vorzugsweise größer als 80 herstellen. Ferner gelang es auch bei b^{∗} (Blau-Gelb-Wert) nach EN ISO 11664-4 Werte von unter 22 zu erzielen. Dies gelang sogar mit Maisstärke, die im Vergleich zur Kartoffelstärke über einen höheren Proteinanteil verfügt und daher bei thermischer Belastung deutlich stärker zu Verfärbungen neigt. Weiterhin wiesen die Stärkeblends einen überraschend niedrigen Gehalt an cyclischen Verunreinigungen wie Tetrahydrofuran (THF) auf. Der THF-Gehalt der mit dem erfindungsgemäßen Verfahren des Anspruchs 12 hergestellten Stärkemischungen lag in der Regel bei unter 10 ppm, insbesondere unter 5 ppm und insbesondere bevorzugt unter 3 ppm.

Mit dem erfindungsgemäßen Verfahren sind Stärkeblends zugänglich, die vorwiegend (über 50 Gew.-%) und bevorzugt über 60% aus nachwachsenden Rohstoffen bestehen. Der Anteil an nachwachsenden Rostoffen kann mit der ¹⁴C-Methode entsprechend der DIN CERTCO oder Vincotte Norm bestimmt werden. Gleichzeitig sind diese Stärkeblends in einem Gartenkomposthaufen biologisch abbaubar entsprechend der Norm OK Compost HOME des zertifitierungssystems Vincotte. Da sich die Stärkeblends nahezu stippenfrei herstellen lassen, können sie zu dünnen Folien mit einer Dicke kleiner 20 und vorzugsweise kleiner 10 Mikrometern ausgezogen werden. Aufgrund der gleichmäßigen Dispergierung der Stärkepartikel in der Polymermatrix weisen die Folien sehr gute mechanische Eigenschaften wie insbesondere eine hohe Zugfestigkeit sowie eine hohe Weiterreißfestigkeit auf.

Bevorzugte Stärkeblends, die das obengenannte Eigenschaftsprofil aufweisen, haben die folgende Zusammensetzung:
i) 53 bis 61 Gew.-% eines Polybutylenadipat-coterephthalat (PBAT) und/oder Polybutylensebacat-coterephthalat (PBSeT), enthaltend jeweils 1,4-Butandiol aus erneuerbaren Quellen;
ii) 39 bis 47 Gew.-% einer thermoplastifizierten Stärke.

Insbesondere bevorzugt sind Stärkeblends, die das obengenannte Eigenschaftsprofil aufweisen, und die folgende Zusammensetzung aufweisen:
i) 45,4 bis 62,95 Gew.-% eines PBAT und/oder PBSeT, enthaltend 1,4-Butandiol aus erneuerbaren Quellen;
ii) 35 bis 47 Gew.-% einer thermoplastifizierten Stärke,
iii) 2 bis 7 Gew.-% Polymilchsäure;
iv) 0,05 bis 0,6 Gew.-% eines Epoxidgruppen-haltigen Copolymers auf Basis Styrol, Acrylsäureester und/oder Methacrylsäureester.

### Ausführungsbeispiele

### Einsatzstoffe:

A1) ecoflex^{®} F Blend C1200, aliphatisch-aromatischer Polyester der Firma BASF mit einem MVR von 3 bis 5 cm³/10 min bei 190°C / 2.16 kg.
B1) Native Maisstärke, Wassergehalt ca. 12 %
C1) Neosorb 70/70 - sehr schwach kristallierende Sorbitollösung der Fa. Roquette, Feststoffgehalt 70%, Sorbitolgehalt mindestens 50%.

### Beschreibung der verwendeten Extruder:

E1) Gleichläufiger Doppelschneckenextruder der Fa. Coperion, Typ ZSK 40 MC, Durchmesser 40 mm, 14 elektrisch beheizbare und wasserkühlbare Gehäusezonen mit einer Länge von jeweils 4D, L/D = 56 mit einer Benetzungsstrecke von 20D, in die 3 Knetblöcke eingearbeitet wurden. Motorleistung 130 kW, spezifisches Drehmoment von 11,5 Nm/cm³.

### Beschreibung der Blasfolienanlagen:

Blasfolienanlage bestehend aus einem Einwellenextruder mit einem Durchmesser von 30mm und einer Länge von 25D, einem Schmelzewendelverteiler mit 80 mm Durchmesser und einem Düsenspalt von 0.8 mm. Das Aufblasverhältnis beträgt typischerweise 3.5, was in einer Liegebreite des Folienschlauchs von ungefähr 440 mm resultiert.

### Analytik:

Wasserbestimmung: Die Bestimmung des Restwassergehaltes der Granulate erfolgte nach Karl-Fischer (Mettler-Toledo InMotion KF).

Melt-Volume-Rate: Die Melt Volume Rate wurde nach EN ISO 1133bei den angegebenen Temperaturen und Gewichten bestimmt und in cm3 / 10 min angegeben.

Mittlerer Stärkepartikeldurchmesser: Aus der in Beispiel 2 hergestellten Folie wurde eine Probe bei minus 80°C per Mikrotomschnitt parallel zur Extrusionsrichtung gewonnen. Diese Probe wurde mittels Rasterkraftmikroskopie an jeweils 15 x 15 Mikrometer großen Ausschnitten untersucht. Die härtere TPS-Phase lässt sich sehr gut von der weicheren Polymerphase unterscheiden und erlaubt die präzise Bestimmung der Blendmorphologie und Partikelgrößen der im Polymer dispergierten Stärkepartikel. Die Auswertung der Partikelgrößen ergab eine mittlere Partikelgröße von 466 Nanometern und einen maximalen Partikeldurchmesser von nur 1488 Nanometern, was die sehr feinteilige Dispergierung der Stärkepartikel in der Polymerphase beweist.

THF-Bestimmung: Die THF-Bestimmung erfolgte per Headspace-GC-MS in Anlehnung an DIN 38407-F 43 2014-10 und LA-GC-013.071 (Headspace GC-MS-Bestimmung von volaticlen organischen Substanzen in low-fat Nahrungsmitteln). Dazu wird eine geeignete Menge der Probe in Dimethylacetamid gelöst und THF-d8 als interner Standard zugegeben. Die im Headspace-GC-Gläschen verschlossene Probe wird auf einem Agilent HS-GC/MS im Headspace-Ofen bei 85°C für 30 min ausgeheizt und anschließend vermessen. Als Trägergas dient Helium. Der Wert wird extern kalibriert unter Berücksichtigung der Wiederfindung des internen Standards (THF-d8) und einer Matrixeffektkontrolle (Matrix -Spike).

Bestimmung des Helligkeitswertes L^{∗} und des b^{∗}-Wertes: Beide Werte wurden nach EN ISO 11664-4 (CIE 15:2004) bestimmt. Es wurde der Mittelwert aus 4 Messungen an Granulatkörnern (Größe zwischen 3-8 mm) gebildet, welche 2cm hoch geschichtet waren um sicherzustellen, dass sie eine deckenede Schicht ergaben. Zwischen den 4 Messungen wurde der Behälter um jeweils 90° gedreht. Die Messung erfolgte mit einem Datacolor 650. Es wurde mit Kugelgeometrie d/8° , mit Glanzeinschluss (SCI) und Normlichtart D65 in Kobmination mit dem CIE 1963 10° -Normbeobachter gemessen.

### Erfindergemäße Beispiele:

### Beispiele 1 bis 7 (Extruder E1, Ausführungsform B):

Alle Einsatzstoffe wurden mit gravimetrischen Dosierwaagen dosiert. Die nativen Stärken B wurde in Zone 1 des Extruders in Pulverform zudosiert. Der oder die Weichmacher C wurden etwa in der Mitte von Zone 2 unter Verwendung einer gravimetrisch gesteuerten Zahnradpumpe dosiert. Der Einsatzstoff A wurde über einen Side-Feeder (ZSB) in Granulatform in Zone 6 des Extruders zudosiert. Zwischen der Weichmacherdosierung in Zone 2 und der Polymerdosierung in Zone 6 wurden neben Förderelementen auch 1 - 5 mischenden Elementen (neutrale Knetblöcke und/oder rückfördernde Zahnmischelemente) eingebaut. Überschüssiges Wasser wurde in Zone 13 durch eine 40 mm Seitenentgasung entfernt und das Produkt über eine Düsenplatte in Form von Strängen extrudiert, die in einem Wasserbad abgekühlt und granuliert wurden.

Die Polymergranulate wurden im Anschluss bei 70°C bis auf die in der Tabelle angegebenen Restfeuchten getrocknet.

### Beispiele 8 (Extruder E1, Ausführungsform A):

Alle Einsatzstoffe wurden mit gravimetrischen Dosierwaagen dosiert. Die nativen Stärken B und der Einsatzstoff A wurden in Zone 1 des Extruders über 2 getrennte Dosierwagen zudosiert. Der oder die Weichmacher C wurden etwa in der Mitte von Zone 2 unter Verwendung einer gravimetrisch gesteuerten Zahnradpumpe in flüssiger Form dosiert. In den Zonen 1-6 wurden ausschließlich fördernde Schneckenelemente verwendet. Überschüssiges Wasser wurde in Zone 13 durch eine 40mm Seitenentgasung entfernt und das Produkt über eine Düsenplatte in Form von Strängen extrudiert, die in einem Wasserbad abgekühlt und granuliert wurden.

Die Polymergranulate wurden im Anschluss bei 70°C bis auf die in der Tabelle angegebenen Restfeuchten getrocknet.

| | **Beispiel 1** | **Beispiel 2** | **Beispiel 3** | **Beispiel 4** | **Beispiel 5** |
|---|---|---|---|---|---|
| **Extruder** | E1 | E1 | E1 | E1 | E1 |
| **Drehzahl U/min** | 350 | 350 | 350 | 350 | 350 |
| | | | | | |
| **Temperaturprofil** / **° C** | Soll / Ist | Soll / Ist | Soll / Ist | Soll / Ist | Soll / Ist |
| Zone 1 | WK^{∗} / 31 | Wasserkühlung WK^{∗} / 33 | WK^{∗} / 34 | WK^{∗} / 31 | WK^{∗} / 32 |
| Zone 2 | 30 / 38 | 30 / 39 | 30 / 38 | 30 / 36 | 30 / 37 |
| Zone 3 | 30 / 42 | 30 / 46 | 30 / 46 | 30 / 43 | 30 / 44 |
| Zone 4 | 30 / 46 | 30 / 48 | 30 / 49 | 30 / 43 | 30 / 44 |
| Zone 5 | 30 / 56 | 30 /57 | 30 / 58 | 30 / 49 | 30 / 49 |
| Zone 6 | 30 / 57 | 30 / 97 | 30 / 98 | 30 / 50 | 30 / 51 |
| Zone 7 | 60 / 57 | 120 / 119 | 120 / 121 | 60 / 62 | 60 / 60 |
| Zone 8 | 140 / 137 | 140 / 141 | 140 / 144 | 140 / 138 | 140 / 143 |
| Zone 9 | 160 / 158 | 160 / 160 | 160 / 160 | 160 / 160 | 160 / 160 |
| Zone 10 | 160 /160 | 160 / 160 | 160 / 160 | 160 / 160 | 160 / 160 |
| Zone 11 | 160 / 178 | 160 / 179 | 160 / 178 | 160 / 186 | 160 / 180 |
| Zone 12 | 160 / 160 | 160 / 160 | 160 / 160 | 160 / 164 | 160 / 163 |
| Zone 13 | 160 / 159 | 160 / 160 | 160 / 160 | 160 / 160 | 160 / 162 |
| Zone 14 | 160 / 173 | 160 / 175 | 160 / 171 | 160 / 177 | 160 / 168 |
| Zone 15 (Kopf) | 160 / 164 | 160 / 164 | 160 / 161 | 160 / 167 | 160 / 161 |
| | | | | | |
| Benetzungsstrecke ^{∗∗} | 20D | 20D | 20D | 20D | 20D |

| | | | | | |
|---|---|---|---|---|---|
| ^{∗} WK = Wasserkühlung, nicht regelbar ^{∗∗} Definiert als Wegstrecke ab der Dosierung des Weichmachers (ganz oder teilweise) bis zum Beginn der Aufschmelzzone / Plastifizierungszone für die Stärke in Vielfachen des Extruderdurchmessers D. | | | | | |

| | **Beispiel 1** | **Beispiel 2** | **Beispiel 3** | **Beispiel 4** | **Beispiel 5** |
|---|---|---|---|---|---|
| Dosiermenge & -zone A1 (kg/h) | 65,0 / Z6 | 65,0 /Z6 | 60,0 /Z6 | 65 / Z6 | 60,0 / Z6 |
| Dosiermenge B1 (kg/h) | 29,5 | 29,5 | 33,7 | 29,5 | 33,7 |
| Dosiermenge C1 (kg/h) | 13,0 | 13,0 | 14,0 | 11,5 | 14,0 |
| Gesamtdurchsatz / kg/h | 107,5 | 107,5 | 107,7 | 105,5 | 107,7 |
| Schmelzetemperatur (am Düsenautritt in ° C) | 209 | 213 | 205 | 210 | 201 |
| TPS-Anteil im Endprodukt / % | 35,0 | 35,0 | 39,7 | 34,4 | 39,7 |
| | | | | | |
| Restfeuchte nach Trocknen (ppm) | 850 | 720 | 860 | 1910 | 2490 |
| MVR nach Trocknen (190 ° C, 5 kg) | 4,5 | 4,5 | 3,6 | 4,8 | 4,1 |
| | | | | | |

| **Folienextrusion** | | | | | |
|---|---|---|---|---|---|
| Drehzahl (U/min) | 80 | 80 | 80 | 80 | 80 |
| Temperaturprofil (° C) | | | | | |
| Einzugszone | wassergekühlt | wassergekühlt | wassergekühlt | wassergekühlt | wassergekühlt |
| Zone 1 | 120 | 120 | 120 | 120 | 120 |
| Zone 2 | 170 | 170 | 170 | 170 | 170 |
| Zone 3 | 170 | 170 | 170 | 170 | 170 |
| Flansch | 170 | 170 | 170 | 170 | 170 |
| Krümmer | 170 | 170 | 170 | 170 | 170 |
| Wendelverteiler | 170 | 170 | 170 | 170 | 170 |
| Düse | 170 | 170 | 170 | 170 | 170 |
| | | | | | |
| Aufblasverhältnis | 1 : 3,5 | 1: 3,5 | 1: 3,5 | 1: 3,5 | 1: 3,5 |
| Foliendicke (µm, aus Flächengewicht) | 14,9 | 14,9 | 15,4 | 14,9 | 14,6 und 9,0* |
| Foliendicke (µm, per Folientaster) | 16 | 17 | 19 | 17 | 18 / 11 |
| Visuelle Bewertung der Folie^{∗∗} | 1 | 1 | 1 | 1 | 1 |
| L^{∗} (Helligkeitswert) | - | - | - | - | 83,04^{∗∗∗} |
| b^{∗} (Blau-GelbWert) | - | - | - | - | 18,2^{∗∗∗} |
| THF-Gehalt vor dem Trocknen | - | - | - | - | 2,3 ppm |

| | | | | | |
|---|---|---|---|---|---|
| ^{∗} Die maximal mögliche Abzugsgeschwindigkeit der Folienanlage B2 von 30/min limitiert die minimal erreichbare Foliendicke auf 9 Mikrometer - die Qualität des Stärkeblends würde auch noch dünnere Folien erlauben. ^{∗∗} **1:** wenige und nur kleine Stippen, kein Locheinfall **2:** wenige Stippen, teils etwas größer, kein Locheinfall **3:** mehr Stippen, ab und zu auch mittel bis große Stippen, ab und zu Locheinfall **4:** viele mittlere und teils größere Stippen, regelmäßig Locheinfall, Folie gerade noch fahrbar **5:** viele mittelgroße und teils auch große Stippen, häufig Locheinfall, Folie nicht stabil über längere Zeit fahrbar **6:** viele mittlere und große Stippen, ständiger Locheinfall, Folie bricht immer wieder zusammen ^{∗∗∗} Analog zu der Extruderkonfiguration aus Beispiel 1 in EP 2467418A1 wurde ein Blend aus 60 kg/h A1, 33,7 kg/h B1 und 14,0 kg/h C1 auf dem Extruder E1 hergestellt. Bei einer | | | | | |

Drehzahl von 350 U/min betrug die Schmelztemperatur am Düsenaustritt 248°C. Die daraus hergestellen Blasfolien wiesen eine erheblich höhere Anzahl an Stärkeagglomeraten auf als in Beispiel 5 und ließen sich nicht auf Dicken unter ca. 25 Mikrometern ausziehen, da es zu ständigem Locheinfall kam. Ferner war das Produkt bräunlich verfärbt. Der Helligkeitswert des Granulates L^{∗} betrug nur noch 72,96 und der b^{∗}-Wert 24,29, dh. das Granulat war deutlich dunkler und wies einen stärkeren Gelbwert auf als das erfindergemäße Granulat aus Beispiel 5.

| | **Beispiel 1** | **Beispiel 2** | **Beispiel 3** | **Beispiel 4** | **Beispiel 5** |
|---|---|---|---|---|---|
| TPS-Anteil im Blend /% | 35 | 35 | 40 | 34 | 40 |
| Foliendicke (µm, aus Flächengewicht) | 14,9 | 14,9 | 15,4 | 14,9 | 14,6/9,0 |
| Foliendicke (µm, per Folientaster) | 16 | 17 | 19 | 17 | 18 / 11 |

| **Zugversuch Maschinenrichtung** | | | | | |
|---|---|---|---|---|---|
| E-Modul / MPa | 144 | 131 | 162 | 175 | 146 / 142 |
| Streckspannung / MPa | - | - | - | - | - |
| Streckdehnung / % | - | - | - | - | - |
| Zugfestigkeit / MPa | 27,8 | 25,5 | 23,3 | 30,9 | 21,5 / 23,4 |
| Dehnung bei max. Zugfestigkeit / % | 338 | 419 | 318 | 409 | 317 / 168 |
| Reißfestigkeit / MPa | 22,9 | 23,8 | 18,8 | 29,7 | 18,7 / 14,7 |
| Reißdehnung /% | 347 | 424 | 326 | 414 | 328 / 181 |
| | | | | | |

| **Zugversuch Querrichtung** | | | | | |
|---|---|---|---|---|---|
| E-Modul / MPa | 132 | 160 | 161 | 157 | 163 / 120 |
| Streckspannung / MPa | - | 9,2 | - | 8,8 | - |
| Streckdehnung / % | - | 17,0 | - | 22,1 | - / - |
| Zugfestigkeit / MPa | 21,2 | 22,0 | 17,7 | 22,8 | 16,6 / 15,7 |
| Dehnung bei max. Zugfestigkeit / % | 498 | 535 | 434 | 492 | 421 / 392 |
| Reißfestigkeit / MPa | 20,2 | 20,5 | 17,2 | 22,0 | 16,3 / 14,4 |
| Reißdehnung /% | 502 | 539 | 438 | 494 | 425 / 399 |
| | | | | | |
| **Dart Drop W_{F}** / **g** | 198 | 210 | 156 | 141 | 135 |
| **Weiterreißfestigkeit Maschinenrichtung /mN** | 1415 | 1359 | 1906 | 2054 | 1605 / 525 |
| **Weiterreißfestigkeit Querrichtung /mN** | 4105 | 3687 | 5024 | 4506 | 4318 / 2278 |

| | **Beispiel 6** | **Beispiel 7** | **Beispiel 8** |
|---|---|---|---|
| **Extruder** | E1 | E1 | E1 |
| **Drehzahl U/min** | 300 | 350 | 400 |
| | | | |
| **Temperaturprofil / ° C** | Soll / Ist | Soll / Ist | Soll / Ist |
| Zone 1 | Wasserkühlung WK^{∗} / 29 | Wasserkühlung WK^{∗} / 31 | WK / 29 |
| Zone 2 | 30 / 32 | 30 / 33 | 30 / 29 |
| Zone 3 | 30 / 29 | 30/31 | 30 / 29 |
| Zone 4 | 30 / 28 | 30/31 | 30 / 29 |
| Zone 5 | 30 / 33 | 30 / 37 | 30/31 |
| Zone 6 | 30 / 38 | 30/41 | 50 / 51 |
| Zone 7 | 30/42 | 30/46 | 140/ 142 |
| Zone 8 | 140 / 117 | 140 / 132 | 160 / 163 |
| Zone 9 | 160 / 160 | 160 / 160 | 160 / 160 |
| Zone 10 | 160 / 160 | 160 / 161 | 160 / 160 |
| Zone 11 | 160 / 160 | 160 / 169 | 160 / 185 |
| Zone 12 | 160 / 170 | 160 / 165 | 160 / 150 |
| Zone 13 | 160/162 | 160 / 158 | 160 / 166 |
| Zone 14 | 160 / 150 | 160 / 157 | 160 / 193 |
| Zone 15 | 160 (Kopf) / 161 | 160 (Kopf) / 161 | 160 / 178 |
| | | | |
| Benetzungsstrecke^{∗∗} | 22D | 22D | 18D |

| | | | |
|---|---|---|---|
| ^{∗}WK = Wasserkühlung, nicht regelbar ^{∗∗} Definiert als Wegstrecke ab der Dosierung des Weichmachers (ganz oder teilweise) bis zum Beginn der Aufschmelzzone / Plastifizierungszone für die Stärke in Vielfachen des Extruderdurchmessers D. | | | |

| | **Beispiel 6** | **Beispiel 7** | **Beispiel 8** |
|---|---|---|---|
| Dosiermenge & -zone A1 (kg/h) | 65 / Z6 | 78 / Z6 | 105 / Z1 |
| Dosiermenge B1 (kg/h) | 29,5 | 35,4 | 37,8 |
| Dosiermenge C1 (kg/h) | 13 | 15,6 | 16,8 |
| Gesamtdurchsatz / kg/h | 107,5 | 129 | 159,6 |
| Schmelzetemperatur (am Düsenaustritt in ° C) | 198 | 200 | 220 |
| TPS-Anteil im Endprodukt / % | 35,0 | 35,0 | 30,0 |
| | | | |
| Restfeuchte nach Trocknen (ppm) | 2400 | 2170 | 760 |
| MVR nach Trocknen (190 ° C, 5 kg) | 3,2 | 5,4 | 4,0 |
| | | | |

| **Folienextrusion** | | | |
|---|---|---|---|
| Drehzahl (U/min) | 80 | 80 | 80 |
| Temperaturprofil (° C) | | | |
| Einzugszone | Wasserkühlung | Wasserkühlung | Wasserkühlung |
| Zone 1 | 120 | 120 | 120 |
| Zone 2 | 170 | 170 | 170 |
| Zone 3 | 170 | 170 | 170 |
| Flansch | 170 | 170 | 170 |
| Krümmer | 170 | 170 | 170 |
| Wendelverteiler | 170 | 170 | 170 |
| Düse | 170 | 170 | 170 |
| | | | |
| Aufblasverhältnis | 1 : 3,5 | 1 : 3,5 | 1 : 3,5 |
| Foliendicke (µm, aus Flächengewicht) | 15,3 | 15,8 | 15,3 |
| Foliendicke (µm, per Folientaster) | 21,5 | 18,0 | 17,8 |
| Visuelle Bewertung der Folie^{∗} | 2 | 1 | 1 |
| | | | |

| | | | |
|---|---|---|---|
| ^{∗} **1:** wenige nur kleine Stippen, kein Locheinfall **2:** wenige Stippen, teils etwas größer, kein Locheinfall **3:** mehr Stippen, ab und zu auch mittel bis große Stippen, ab und zu Locheinfall **4:** viele mittlere und teils größere Stippen, regelmäßig Locheinfall, Folie gerade noch fahrbar **5:** viele mittelgroße und teils auch große Stippen, häufig Locheinfall, Folie nicht stabil über längere Zeit fahrbar **6:** viele mittlere und große Stippen, ständiger Locheinfall, Folie bricht immer wieder zusammen | | | |

| | **Beispiel 6** | **Beispiel 7** | **Beispiel 8** |
|---|---|---|---|
| TPS-Anteil im Blend /% | 35,0 | 35,0 | 30,0 |
| Foliendicke (µm, aus Flächengewicht) | 15,3 | 15,8 | 15,3 |
| Foliendicke (µm, per Folientaster) | 21,5 | 18,0 | 17,8 |

| **Zugversuch Maschinenrichtung** | | | Nicht bestimmt |
|---|---|---|---|
| E-Modul / MPa | 153 | 142 | |
| Streckspannung / MPa | - | - | |
| Streckdehnung / % | - | - | |
| Zugfestigkeit / MPa | 22,6 | 29,2 | |
| Dehnung bei max. Zugfestigkeit / % | 266 | 381 | |
| Reißfestigkeit / MPa | 21,9 | 26,5 | |
| Reißdehnung /% | 269 | 385 | |
| | | | |

| **Zugversuch Querrichtung** | | | Nicht bestimmt |
|---|---|---|---|
| E-Modul / MPa | 165 | 127 | |
| Streckspannung / MPa | - | - | |
| Streckdehnung / % | - | - | |
| Zugfestigkeit / MPa | 16,5 | 19,6 | |
| Dehnung bei max. Zugfestigkeit / % | 365 | 465 | |
| Reißfestigkeit / MPa | 15,9 | 19,3 | |
| Reißdehnung /% | 368 | 468 | |
| | | | |
| **Dart Drop W_{F} / g** | 123 | 381 | Nicht bestimmt |
| **Weiterreißfestigkeit Maschinenrichtung /mN** | 1235 | 1304 | Nicht bestimmt |
| **Weiterreißfestigkeit Querrichtung /mN** | 3009 | 4051 | Nicht bestimmt |

Beispiel 9: Mit den gleichen Parametern wie in Beispiel 5 wurde ein Blend aus 54,8% partiell biobasiertem Bio-PBAT (identisch zu A1, aber mit 100% biobasierten fermentativ hergestelltem Bio-BDO anstelle von fossilem BDO hergestellt), 5% Polymilchsäure 4043D der Fa. Natureworks, 0,2 % Joncryl ADR 4468, 33,7% B1 und 14,0% C1 compoundiert. Die Polymilchsäure und as Joncryl wurden zusammen mit dem Bio-PBAT dosiert. Der MVR nach dem Trocknen betrug 2,8 (190°C / 5kg), der Helligkeitswert L* 83,64 und der b*-Wert 17,8. Der Compound konnte problemlos mit denselben Parametern wie das Beispiel 5 zu einer 10 Mikrometer dünnen praktisch stippenfreien Folie verarbeitet werden mit noch ausreichend guten mechanischen Kennwerten für einen Obst- und Gemüsebeutel (insbesondere was das Weiterreißverhalten in Maschinenquerrichtung angeht) und weist ggü. Beispiel 5 einen erhöhten biobasierten ¹⁴C-Anteil von ca. 60% auf.

## Patentansprüche

1. Einstufiges Verfahren zur Herstellung von Stärkeblends auf einem Doppelschneckenextruder, wobei
i) die Stärke zusammen mit einem Weichmacher eine Benetzungsstrecke von 8D bis 30D in einem Extruder bei Temperaturen unterhalb 85°C unter Vermischung duchläuft, wobei D definiert ist als der Schneckendurchmesser des Schneckenzylinders und die Benetzungsstrecke definiert ist ab der Stelle auf der Extruderschnecke, bei der die Stärke und die ganze oder teilweise Weichmachermenge aufeinandertreffen bis zu der Stelle im Extruder, bei der die Stärke gelatinisiert und zu thermoplastischer Stärke aufgeschlossen wird;
ii) in einer Plastifizierstrecke von 10D bis 50D die Extrudertemperatur schrittweise bis auf über 130°C eingestellt wird, wobei die Stärke aufgeschlossen, destrukturiert, thermoplastifiziert und im mit Stärke nicht mischbaren Polymer dispergiert wird und vor dem Verlassen des Extruders ein Wassergehalt kleiner 5% in Bezug auf den Stärkeblend eingestellt wird;
wobei das mit Stärke nicht mischbare Polymer in aufgeschmolzener oder granulärer Form an einer beliebigen Stelle im Extruder zugegeben und in der Folge eine Mischung aller vorliegenden Komponenten hergestellt wird.

2. Einstufiges Verfahren zur Herstellung von Stärkeblends auf zwei hintereinander geschalteten Doppelschneckenextrudern, wobei
i) die Stärke zusammen mit einem Weichmacher eine Benetzungsstrecke von 8D bis 80D bei Temperaturen unterhalb 85°C unter Vermischung duchläuft, wobei D definiert ist als der Schneckendurchmesser des Schneckenzylinders und die Benetzungsstrecke definiert ist ab der Stelle auf der Extruderschnecke, bei der die Stärke und die ganze oder teilweise Weichmachermenge aufeinandertreffen bis zu der Stelle im Extruder, bei der die Stärke gelatinisiert und zu thermoplastischer Stärke aufgeschlossen wird;
ii) in einer Plastifizierstrecke von 10D bis 50D die Extrudertemperatur schrittweise bis auf über 130°C eingestellt wird, wobei die Stärke aufgeschlossen, destrukturiert, thermoplastifiziert und im mit Stärke nicht mischbaren Polymer dispergiert wird und vor dem Verlassen des Extruders ein Wassergehalt kleiner 5% in Bezug auf den Stärkeblend eingestellt wird;
wobei das mit Stärke nicht mischbare Polymer in aufgeschmolzener oder granulärer Form an einer beliebigen Stelle im Extruder zugegeben und in der Folge eine Mischung aller vorliegenden Komponenten hergestellt wird.

3. Verfahren nach Anspruch 1 oder 2, bei der die Benetzungsstrecke mindestens 12D lang ist.

4. Verfahren nach Anspruch 1 bis 3, bei der die Temperatur der Benetzungsstrecke unter 60°C gehalten wird.

5. Verfahren nach einem der Ansprüche 1 bis 4, bei der das mit Stärke nicht mischbare Polymer noch vor dem Beginn der Benetzungsstrecke in fester Form zugeben wird.

6. Verfahren nach einem der Ansprüche 1 bis 4, bei dem die Benetzungsstrecke neben rein fördernden Elementen noch zusätzliche stark mischende Schneckenelemente enthält und das mit Stärke nicht mischbare Polymer erst nach den zusätzlichen durchmischenden Schneckenelementen der Benetzungsstrecke, zudosiert wird.

7. Verfahren nach Anspruch 6, bei dem das Polymer in fester Form zudosiert wird.

8. Verfahren nach einem der Ansprüche 6 oder 7, bei dem das Polymer vor der Dispergierphase zugegeben wird.

9. Verfahren nach einem der Ansprüche 1 bis 8, bei dem der Extruder eine Mindestlänge von 44D aufweist.

10. Verfahren nach Anspruch 1 bis 9, wobei der Weichmacher ausgewählt ist aus Wasser, Glycerin, Sorbitol und oligomerisiertem Glycerin sowie beliebige Mischungen dieser Verbindungen.

11. Verfahren nach Anspruch 10, wobei der Weichmacher eine wässrige Sorbitollösung umfasst mit einem Wasseranteil von 5 bis 80%, bevorzugt von 5 bis 50%, besonders bevorzugt von 10 bis 35%.

12. Verfahren nach Anspruch 11, wobei die wässrige Sorbitollösung durch Hydrierung einer unvollständig depolymerisierten Stärkelösung hergestellt wurde, die noch signifikante Anteile von mindestens 5% an höhermolekularen Verbindungen als Sorbitol enthält, besonders bevorzugt mehr als 10%, ganz besonders bevorzugt mehr als 15%, bezogen auf die wasserfreie Mischung.

13. Verfahren nach einem der Ansprüche 1,2 oder12, bei dem das Polymer einen aliphatischen oder aliphatisch-aromatischen Polyester umfasst, der als Diolkomponente 1,4-Butandiol - vorzugsweise aus erneuerbarer Quelle - enthält und biologisch abbaubar gemäß EN13432 ist.

14. Stärkeblend mit einem Gehalt an thermoplasifizierter Stärke von 39 bis 47 Gew.-%, bezogen auf die Summe an wasserfreier Stärke und wasserfreiem Weichmacher und einem HelligkeitsL*-Wert nach EN ISO 11664-4/CIE 15:2004 von größer 75, erhältlich nach einem Verfahren gemäß den Ansprüchen 1 bis 13.

15. Stärkeblend nach Anspruch 14 und einem HelligkeitsL*-Wert nach EN ISO 11664-4 / CIE 15:2004 von größer 80 und einem THF-Gehalt von kleiner 5 ppm.

16. Stärkeblend bestehend zu über 50%, vorzugsweise über 60% aus nachwachsenden Rohstoffen, enthaltend:
i) 53 bis 61 Gew.-% eines Polybutylenadipat-coterephthalat (PBAT) und/oder Polybutylensebacat-coterephthalat (PBSeT), auf Basis 1,4-Butandiol aus erneuerbaren Quellen; und
ii) 39 bis 47 Gew.-% einer thermoplastifizierten Stärke.

17. Stärkeblend, enthaltend:
i) 45,4 bis 62,95 Gew.-% eines Polybutylenadipat-coterephthalat (PBAT) und/oder Polybutylensebacat-coterephthalat (PBSeT), auf Basis 1,4-Butandiol aus erneuerbaren Quellen; und
ii) 35 bis 47 Gew.-% einer thermoplastifizierten Stärke;
iii) 2 bis 7 Gew.-% Polymilchsäure; und
iv) 0,05 bis 0,6 Gew.-% eines Epoxidgruppen-haltigen Copolymers auf Basis Styrol, Acrylsäureester und/oder Methacrylsäureesters.

18. Stärkeblend nach Anspruch 15 bis 17, wobei als Stärke Maisstärke, Weizenstärke oder Erbsenstärke eingesetzt wird.

19. Stärkeblends nach Anspruch 18, wobei als Stärke Maisstärke eingesetzt wird.

## Claims

1. A single-stage process for the production of starch blends in a twin-screw extruder, where
i) the starch, together with a plasticizer, passes through a wetting section of length 8D to 30D in an extruder at temperatures below 85°C, with mixing, where D is defined as the screw diameter of the screw cylinder and the wetting section is defined as starting at that point on the extruder screw at which the starch and the entire or partial quantity of plasticizer encounter one another and ending at that point in the extruder at which the starch is gelatinized and is digested to give thermoplastic starch;
ii) in a plastifying section of length 10D to 50D the extruder temperature is adjusted stepwise to above 130°C, where the starch is digested, destructured and thermoplastified, and is dispersed in the starch-immiscible polymer, and a water content below 5%, based on the starch blend, is established before the material leaves the extruder;
where the starch-immiscible polymer is added in molten or granular form at any desired point in the extruder, and a mixture of all of the components present is consequently produced.

2. A single-stage process for the production of starch blends in two twin-screw extruders arranged in series, where
i) the starch, together with a plasticizer, passes through a wetting section of length 8D to 80D at temperatures below 85°C, with mixing, where D is defined as the screw diameter of the screw cylinder and the wetting section is defined as starting at that point on the extruder screw at which the starch and the entire or partial quantity of plasticizer encounter one another and ending at that point in the extruder at which the starch is gelatinized and is digested to give thermoplastic starch;
ii) in a plastifying section of length 10D to 50D the extruder temperature is adjusted stepwise to above 130°C, where the starch is digested, destructured and thermoplastified, and is dispersed in the starch-immiscible polymer, and a water content below 5%, based on the starch blend, is established before the material leaves the extruder;
where the starch-immiscible polymer is added in molten or granular form at any desired point in the extruder, and a mixture of all of the components present is consequently produced.

3. The process according to claim 1 or 2, where the length of the wetting section is at least 12D.

4. The process according to any of claims 1 to 3, where the temperature of the wetting section is kept below 60°C.

5. The process according to any of claims 1 to 4, where the starch-immiscible polymer is added in solid form before the beginning of the wetting section.

6. The process according to any of claims 1 to 4, where the wetting section also comprises, alongside purely conveying elements, additional intensified mixing screw elements, and the starch-immiscible polymer is added only downstream of the additional mixing screw elements of the wetting section.

7. The process according to claim 6, where the polymer is added in solid form.

8. The process according to either of claims 6 and 7, where the polymer is added before the dispersion phase.

9. The process according to any of claims 1 to 8, where the minimal length of the extruder is 44D.

10. The process according to any of claims 1 to 9, where the plasticizer is selected from water, glycerol, sorbitol and oligomerized glycerol and any desired mixtures of these compounds.

11. The process according to claim 10, where the plasticizer comprises an aqueous sorbitol solution with 5 to 80% water content, preferably 5 to 50%, particularly preferably 10 to 35%.

12. The process according to claim 11, where the aqueous sorbitol solution has been produced by hydrogenation of an incompletely depolymerized starch solution which still comprises significant proportions of at least 5% of compounds having higher molecular weight than sorbitol, particularly preferably more than 10%, very particularly preferably more than 15%, based on the anhydrous mixture.

13. The process according to any of claims 1, 2 and 12, where the polymer comprises an aliphatic or aliphatic-aromatic polyester which comprises, as diol component, 1,4-butanediol - preferably from a renewable source - and is biodegradable in accordance with EN13432.

14. A starch blend with 39 to 47% by weight of content of thermoplastified starch, based on the entirety of anhydrous starch and of anhydrous plasticizer, and with a lightness value L* in accordance with EN ISO 11664-4 / CIE 15:2004 that is greater than 75, obtainable by a process according to claims 1 to 13.

15. The starch blend according to claim 14 and with a lightness value L* in accordance with EN ISO 11664-4 / CIE 15:2004 that is greater than 80, and with a THF content below 5 ppm.

16. A starch blend consisting to an extent above 50%, preferably above 60%, of renewable feedstocks, comprising:
i) 53 to 61% by weight of a polybutylene adipate-co-terephthalate (PBAT) and/or polybutylene sebacate-co-terephthalate (PBSeT), based on 1,4-butanediol from renewable sources; and
ii) 39 to 47% by weight of a thermoplastified starch.

17. A starch blend, comprising:
i) 45.4 to 62.95% by weight of a polybutylene adipate-co-terephthalate (PBAT) and/or polybutylene sebacate-co-terephthalate (PBSeT), based on 1,4-butanediol from renewable sources; and
ii) 35 to 47% by weight of a thermoplastified starch;
iii)2 to 7% by weight of polylactic acid; and
iv) 0.05 to 0.6% by weight of a copolymer which comprises epoxy groups and is based on styrene, acrylate and/or methacrylate.

18. The starch blend according to claims 15 to 17, where starch used comprises corn starch, wheat starch or pea starch.

19. The starch blend according to claim 18, where starch used comprises corn starch.

## Revendications

1. Procédé en une étape pour la production de mélanges à base d'amidon sur une extrudeuse double vis, dans lequel
i) l'amidon conjointement avec un plastifiant traversent en se mélangeant une zone de mouillage de 8D à 30D dans une extrudeuse à des températures inférieures à 85 °C, D étant défini comme le diamètre de vis du cylindre de la vis et la zone de mouillage étant définie à partir du point sur la vis de l'extrudeuse en lequel l'amidon et la quantité totale ou partielle de plastifiant se rejoignent jusqu'au point dans l'extrudeuse en lequel l'amidon est gélatinisé et décomposé en amidon thermoplastique ;
ii) dans une zone de plastification de 10D à 50D la température de l'extrudeuse est ajustée graduellement jusqu'à plus de 130 °C, l'amidon étant décomposé, déstructuré, thermoplastifié et dispersé dans le polymère non miscible à l'amidon et avant la sortie de l'extrudeuse est ajustée une teneur en eau inférieure à 5 % par rapport au mélange à base d'amidon ;
le polymère non miscible à l'amidon étant ajouté sous forme fondue ou granulaire en un point quelconque dans l'extrudeuse et ensuite est produit un mélange de tous les composants présents.

2. Procédé en une étape pour la production de mélanges à base d'amidon sur deux extrudeuses double vis montées l'une derrière l'autre, dans lequel
i) l'amidon conjointement avec un plastifiant traversent en se mélangeant une zone de mouillage de 8D à 80D à des températures inférieures à 85 °C, D étant défini comme le diamètre de vis du cylindre de vis et la zone de mouillage étant définie à partir du point sur la vis de l'extrudeuse en lequel l'amidon et la quantité totale ou partielle de plastifiant se rejoignent jusqu'au point dans l'extrudeuse en lequel l'amidon est gélatinisé et décomposé en amidon thermoplastique ;
ii) dans une zone de plastification de 10D à 50D la température de l'extrudeuse est ajustée graduellement jusqu'à plus de 130 °C, l'amidon étant décomposé, déstructuré, thermoplastifié et dispersé dans le polymère non miscible à l'amidon et avant la sortie de l'extrudeuse est ajustée une teneur en eau inférieure à 5 % par rapport au mélange à base d'amidon ;
le polymère non miscible à l'amidon étant ajouté sous forme fondue ou granulaire en un point quelconque dans l'extrudeuse et ensuite est produit un mélange de tous les composants présents.

3. Procédé selon la revendication 1 ou 2, dans lequel la zone de mouillage a une longueur d'au moins 12D.

4. Procédé selon la revendication 1 à la revendication 3, dans lequel la température de la zone de mouillage est maintenue au-dessous de 60 °C.

5. Procédé selon l'une des revendications 1 à 4, dans lequel le polymère non miscible à l'amidon est ajouté sous forme solide même avant le début de la zone de mouillage.

6. Procédé selon l'une des revendications 1 à 4, dans lequel la zone de mouillage contient, en plus d'éléments transporteurs proprement dits, encore des éléments de vis supplémentaires fortement mélangeurs et le polymère non miscible à l'amidon n'est ajouté qu'après les éléments de vis homogénéisateurs supplémentaires de la zone de mouillage.

7. Procédé selon la revendication 6, dans lequel le polymère est ajouté sous forme solide.

8. Procédé selon l'une des revendications 6 et 7, dans lequel le polymère est ajouté avant la phase de dispersion.

9. Procédé selon l'une des revendications 1 à 8, dans lequel l'extrudeuse présente une longueur minimale de 44D.

10. Procédé selon la revendication 1 à la revendication 9, dans lequel le plastifiant est choisi parmi l'eau, le glycérol, le sorbitol et le glycérol oligomérisé ainsi que des mélanges quelconques de ces composés.

11. Procédé selon la revendication 10, dans lequel le plastifiant comprend une solution aqueuse de sorbitol ayant une teneur en eau de 5 à 80 %, de préférence de 5 à 50 %, de façon particulièrement préférée de 10 à 35 %.

12. Procédé selon la revendication 11, dans lequel la solution aqueuse de sorbitol a été préparée par hydrogénation d'une solution d'amidon incomplètement dépolymérisé, qui contient en tant que sorbitol encore des proportions significatives d'au moins 5 %, de façon particulièrement préférée plus de 10 %, de façon tout particulièrement préférée plus de 15 %, par rapport au mélange anhydre, de composés à masse moléculaire relativement élevée.

13. Procédé selon l'une des revendications 1, 2 et 12, dans lequel le polymère comprend un polyester aliphatique ou aliphatique-aromatique, qui contient en tant que composant diol du 1,4-butanediol - de préférence provenant d'une source renouvelable - et est biologiquement dégradable selon EN13432.

14. Mélange à base d'amidon ayant une teneur en amidon thermoplastique de 39 à 47 % en poids, par rapport à la somme d'amidon anhydre et de plastifiant anhydre et une valeur L* de clarté selon EN ISO 11664-4/CIE 15:2004 de plus de 75, pouvant être obtenu conformément à un procédé selon les revendications 1 à 13.

15. Mélange à base d'amidon selon la revendication 14 et ayant une valeur L* de clarté selon EN ISO 11664-4/CIE 15 :2004 de plus de 80 et une teneur en THF de moins de 5 ppm.

16. Mélange à base d'amidon, constitué à raison de plus de 50 %, de préférence de plus de 60 % de matières premières renouvelables, contenant :
i) 53 à 61 % en poids d'un copolymère butylène adipate/téréphtalate (PBAT) et/ou copolymère butylène sébaçate/téréphtalate (PBSeT), à base de 1,4-butanediol provenant de sources renouvelables ; et
ii) 39 à 47 % en poids d'un amidon thermoplastique.

17. Mélange à base d'amidon, contenant :
i) 45,4 à 62,95 % en poids d'un copolymère butylène adipate/téréphtalate (PBAT) et/ou copolymère butylène sébaçate/téréphtalate (PBSeT), à base de 1,4-butanediol provenant de sources renouvelables ; et
ii) 35 à 47 % en poids d'un amidon thermoplastique ;
iii) 2 à 7 % en poids de poly(acide lactique) ; et
iv) 0,05 à 0,6 % en poids d'un copolymère contenant des groupes époxy à base de styrène, d'ester d'acide acrylique et/ou d'ester d'acide méthacrylique.

18. Mélange à base d'amidon selon la revendication 15 à la revendication 17, dans lequel comme amidon est utilisé de l'amidon de maïs, de l'amidon de blé ou de l'amidon de pois.

19. Mélange à base d'amidon selon la revendication 18, dans lequel comme amidon est utilisé de l'amidon de maïs.
